# EUROPEAN PATENT APPLICATION

(11) **EP 4 834 770 A1**
(43) Date of publication of application: **04.11.2026**
(21) Application number: 26175011.1
(22) Date of filing: 28.04.2026
(51) Int. Cl.: B64D 37/16, B64D 37/00, B64F 1/28

(54) **AIRCRAFT FUEL SYSTEM**

(30) Priority: 29.04.2025 GB 202506508
(71) Applicant: Airbus Operations Ltd, Filton, Bristol BS34 7PA (GB)
(72) Inventor: EDWARDS, Henry, Filton, Bristol, BS34 7PA (GB)
(74) Representative: EIP

(57) **Abstract**

Disclosed is an aircraft fuel system comprising a fuel line configured to fluidically connect a fuel tank to a fuel-consuming component. The fuel line comprises, fluidically connecting the fuel tank to the fuel-consuming component: a fuel conduit, and a structure in fluidic connection with the fuel conduit. The structure comprising an inlet and outlet for conveying aircraft fuel from the fuel tank to the fuel-consuming component through an interior volume of the structure. A cross-sectional area of the interior volume of the structure is larger than a cross-sectional area of an interior of the fuel conduit, and the structure comprising a fluid refill port fluidically connecting the interior of the structure to an exterior of the structure and through which fluid can be provided to the structure. An aircraft comprising the aircraft fuel system, and a method of operating an aircraft are also disclosed.

## Description

### TECHNICAL FIELD

The present invention relates to aircraft fuel systems.

### BACKGROUND

Aircraft comprise fuel systems to store and utilise aircraft fuel. Use of aircraft fuel can produce unwanted emissions into the atmosphere, however. It is desirable to improve aircraft fuel systems to facilitate a reduction in unwanted emissions.

### SUMMARY

A first aspect of the present invention provides an aircraft fuel system. The aircraft fuel system comprises a fuel line configured to fluidically connect a fuel tank to a fuel-consuming component. The fuel line comprises, fluidically connecting the fuel tank to the fuel-consuming component: a fuel conduit, and a structure in fluidic connection with the fuel conduit. The structure comprises an inlet and outlet for conveying aircraft fuel from the fuel tank to the fuel-consuming component through an interior volume of the structure, a cross-sectional area of the interior volume of the structure larger than a cross-sectional area of an interior of the fuel conduit. The structure comprises a fluid refill port fluidically connecting the interior of the structure to an exterior of the structure and through which aircraft fuel can be provided to the structure.

The aircraft fuel system according to the first aspect is operable to store an aircraft fuel additive in the structure, whilst storing aircraft fuel in the fuel tank. The aircraft fuel system is then operable to provide, at a first time, aircraft fuel comprising the aircraft fuel additive to the fuel-consuming component. The fuel-consuming component consumes, at the first time, the aircraft fuel mixed with the aircraft fuel additive, and in doing so may produce fewer unwanted emissions, such as soot, nitrogen oxides, sulphur oxides or other non-CO₂ emissions, for example, compared with consuming aircraft fuel absent such aircraft fuel additive, for example. Through operation of the fuel-consuming component, the contents of the structure of the fuel line, such as aircraft fuel mixed with aircraft fuel additive, is depleted. At a later, second time, aircraft fuel from the fuel tank can then be used by the fuel-consuming component.

Similarly, the aircraft fuel system according to the first aspect is operable to store, in the structure, a further aircraft fuel, such as a synthetic, or sustainable, aviation fuel (SAF) whilst the fuel tank stores conventional aircraft fuel, for example. More generally, the fuel tank may store a first type of aircraft fuel, and the structure may store a second, different type of aircraft fuel. The SAF can be provided to the fuel-consuming component at a first time, and the conventional aircraft fuel from the fuel tank provided to the fuel-consuming component at a second, later time. SAF may produce reduced particulate emissions when used which can be desirable for air quality.

In these ways, the aircraft fuel system facilitates multi-stage fuel consumption. The structure of the fuel line can be dimensioned such that it holds a sufficient quantity of fuel, or fuel additive, for performing operations within an associated operational time frame. For example, the associated operational time frame may relate to an anticipated duration for which the aircraft will be operated on the ground. Accordingly, whilst the aircraft is operated on the ground, such as whilst loading, unloading, taxiing, undergoing maintenance, and the like, the fuel-consuming component is provided with, and consumes, the aircraft fuel and fuel additive blend. Through this operational time frame, therefore, the aircraft may produce fewer emissions. Once the aircraft is airborne, the fuel-consuming component may predominantly consume fuel which has been stored in the fuel tank, and which does not necessarily include fuel additive. Ground operation of the aircraft may be subject to emissions restrictions to protect local air quality, whereas airborne operation may not be subject to such emissions restrictions.

The structure is integrated into a fuel line connecting the fuel tank to the fuel-consuming component. The structure can, in some examples, be retrofit into existing fuel systems to thereby facilitate multi-stage fuel consumption in existing aircraft. This retrofit can require only limited changes in architecture, as the fuel system described herein can take upon a relatively simple form and function passively, as will be described later.

The structure, in having an interior volume with a cross-sectional area larger than a cross-sectional area of the fuel conduit, can therefore have a greater volume-per-length compared with the fuel conduit. This can allow, for a given spatial footprint of the fuel line, the structure to have an enhanced fuel storage capability compared with the fuel conduit. Furthermore, in the context of a retrofit application, for example, a length of fuel conduit which is replaced by a structure in accordance with the present disclosure means that the fuel line is operable to store an increased total volume of fluid therewithin. The cross-sectional area can be taken in a plane perpendicular to a bulk fluid flow direction through the fuel line. In some examples, the total interior volume of the structure is greater than the total volume of the fuel conduit of the fuel line.

A "fuel tank", as used herein, refers to a storage volume for storing aircraft fuel. In some examples, the fuel tank may be an interior fuel storage tank such as interior fuel tanks disposed within a fuselage or a wing of the aircraft. A "fuel conduit", as used herein, refers to elements which are operable to convey fuel from the fuel tank to the fuel-consuming component, such as fuel pipes. A "fuel-consuming component", as used herein, refers to a component which utilises fuel by combustion to generate mechanical or electrical power, for example. It will be appreciated that a "fuel-consuming component" refers to a component configured to consume fuel, and "fuel-consuming component" does not necessitate the component to be in a state of consuming fuel. The fuel-consuming component may be an auxiliary power unit, for example, which is operable to generate energy for operations other than propulsion, for example. The fuel-consuming component may be a jet engine of the aircraft. It will be appreciated that the aircraft fuel system may comprise a fuel line which is configured to fluidically connect multiple fuel tank to multiple fuel-consuming components. The "fluid refill port" can fluidically connect the structure with a source of fluid, such as a blend of aircraft fuel and aircraft fuel additive, undiluted aircraft fuel additive, or a further aircraft fuel such as SAF, the source being external to the aircraft, such as an aircraft refuelling apparatus distinct from the aircraft.

An "aircraft fuel", as used herein, refers to a conventional aviation fuel such as Jet A or Jet A1 fuels, which are generally hydrocarbon-based, and in particular kerosene-based, fuels. An "aircraft fuel additive", as used herein, refers to a substance added to an aircraft fuel for purposes such as reduced unwanted emissions. The aircraft fuel additives described herein can also encompass icing inhibitors, corrosion inhibitors, metal deactivators, static dissipator additives and biocides, for example. The structure, in being operable to store aircraft fuel additive, may store aircraft fuel additive in a concentrated, undiluted, or unblended form. The structure may alternatively store aircraft fuel additive in a blended form, wherein the aircraft fuel additive is blended with aircraft fuel. The resulting mixture of aircraft fuel additive with aircraft fuel may be referred to herein simply as "additive-fuel blend" for brevity. Furthermore, reference to the "fuel additive" should be understood to refer to either unblended or blended forms, unless specified otherwise. For example, the structure storing fuel additive can mean that an additive-fuel blend is being stored, or undiluted fuel additive is being stored. An "SAF" refers to a synthetic, or sustainable, aviation fuel, which are alternative forms of aircraft fuel which can be e.g. non-petroleum based and designed to function in place of conventional aircraft fuel. These can be derived from biomass, for example.

The structure of the fuel line described herein can be used to store something different to the fuel tank. Accordingly, where the structure or fuel system is described as storing e.g. aircraft fuel additive or aircraft fuel additive blends, or providing the same to a fuel-consuming component, it will be appreciated that this description can also apply to examples where a further type of aircraft fuel, such as SAF, is stored and/or released, unless explicitly stated otherwise. This further type of aircraft fuel does not necessarily include aircraft fuel additives, for example.

Aircraft fuel flows, generally, from the fuel tank to the fuel-consuming component. A "bulk fuel flow direction", as used herein, refers to a general, or net, direction of movement of fuel, which generally can be considered a direction along the fuel conduit, and from the inlet to the outlet of the fuel structure. It will be understood that the existence of regions where fluid flows, locally, in a different direction to the bulk fuel flow direction, such as due to eddies in turbulent flow regions, does not negate the existence of an overall bulk fuel flow direction. The bulk fuel flow direction may be a path which is conformal to the structure of the fuel conduit and/or structure, in that the bulk fuel flow direction may be different at different respective regions of the fuel line, albeit whilst following the overall path of fuel from the fuel tank to the fuel-consuming component.

Optionally, the cross-sectional area of the structure is more than twice as large as the cross-sectional area of the fuel conduit, optionally wherein the cross-sectional area is more than three times larger than the cross-sectional area of the fuel conduit. In some examples, the cross-sectional area is more than five times larger than the cross-sectional area of the fuel conduit. In some examples, the volume-per-length (which may be otherwise considered an average cross-sectional area, for example) of the structure is more than twice as large as the volume-per-length of the fuel conduit, such as more than three times larger or more than five times larger. In some examples, the total volume of the structure is more than twice as great as the fuel conduit, such as more than three times larger or more than five times larger, for example. In some examples, the total volume of the structure is more than twice as great as a portion of the fuel conduit having an equivalent spatial footprint, such as more than three times larger or more than five times larger, for example.

Optionally, the volume of the structure exceeds 100 litres. In some examples, the volume exceeds 300 litres. In some examples, the volume exceeds 500 litres. The structure can be dimensioned to store a sufficient quantity of aircraft fuel additive to facilitate operation of the fuel-consuming component across a desired operational timeframe, such as when the ground is operated on the ground. In other examples, the volume of the structure is less than 100 litres, such as 10 litres or smaller. This can reduce a spatial footprint of the structure. The structure, in such examples, may store undiluted aircraft fuel additive.

Optionally, the structure comprises a gas release valve operable to release gas from the interior volume of the structure to the exterior of the structure, optionally wherein the gas release valve is disposed in a ceiling portion of the structure. This can allow air or other gases to escape from the fuel line and reduce aeration of fuel before it arrives at the fuel-consuming component. Aeration of fuel can be detrimental to functioning of the fuel-consuming component. In some examples, the structure comprises a sump portion below the inlet, facilitating a separation of air from the fuel, and the gas release valve is disposed above the sump portion. The sump portion may be the second region as described later on.

Optionally, the structure further comprises a liquid drainage port through which liquid within the structure can be released to the exterior of the structure. This can facilitate drainage of the structure independently from the fuel tank, for example. In some examples, the liquid drainage port is integrally combined with the fluid refill port as a bidirectional liquid port. This can reduce a spatial footprint of interfaces of the structure.

Optionally, the interior volume of the structure has a cross-sectional area which varies gradually along a bulk fuel flow direction through the structure. The gradual change in cross-sectional area can improve fluid flow properties through the structure, such as by reducing turbulent flow which may occur at an abrupt change in cross-sectional profile, for example. In some examples, the cross-sectional area increases with distance from the inlet and the outlet, such that the cross-sectional area is at a maximum at an intermediate position between the inlet and outlet. In some examples, the cross-sectional area varies by no more than approximately one part in ten units of length, e.g. walls of the interior volume having a slope angle of no more than 6 degrees relative to a bulk fuel flow direction through the structure. This can reduce evolution of air from the fuel which can accumulate as an air bubble and may provide disruptive to the supply of fuel to the fuel-consuming component.

Optionally, the structure comprises a barrier element within the interior volume of the structure, the barrier element forming at least a portion of a boundary between a first region of the interior volume and a second region of the interior volume, wherein, in use, a majority of bulk fuel flow direction from the inlet to the outlet is through the first region. Provision of a barrier element can help demarcate a fuel storage region of the interior volume, which is performed by the second region, from a fuel flow region of the interior volume, which is performed by the first region. The barrier element can function as a fuel flow guide to encourage a bulk fuel flow direction directly from the inlet to the outlet, thereby maintain flow rate of fuel through the structure, for example. In some examples, the barrier element may form a total boundary between the first region and the second region of the interior volume, in that movement of fluid is prohibited between the second region and the first region. The barrier element may be selectively reconfigurable to allow movement of fluid from the first region to the second region. In other examples, the barrier element may act to provide a substantial barrier between the first region and the second region (wherein the barrier is provided at a majority of an area between the first region and the second region), but the first region and second region are nonetheless in fluidic communication with one another.

Optionally, the barrier element is perforated such that fluid can move from the second region to the first region. The barrier element, in being perforated, may comprise an array of through holes disposed throughout the barrier element. The array of holes may be a regular arrangement of said through holes, such as arranged in a hexagonal lattice. The holes may be dimensioned such that the through holes are a minority of a surface area of the barrier element, and a majority of the surface area of the barrier element is a solid surface. In some examples, the barrier element is a perforated pipe extending between the inlet and the outlet. In other words, the barrier element has a cylindrical structure. The barrier structure, in being a perforated pipe extending between the inlet and outlet, thereby encourages a bulk fuel flow direction from the inlet to the outlet, whilst allowing fuel additive or the further fuel in the second region to flow into the first region and thereby be conveyed out of the structure and to the fuel-consuming component.

Optionally, the structure comprises an inducer pipe which extends through the barrier element from the second region to the first region to thereby provide a fluid pathway from the second region to the first region. In use, flow of fuel through the structure in the bulk fuel flow direction can induce a flow through the inducer pipe from the second region to the first region. This can facilitate passive provision of fuel or additives from the second region to the first region since movement from the second region to the first region does not require operation of powered components within the structure, for example.

Optionally, a geometric centre of the structure is offset from an axis extending from the inlet to the outlet. In this way, the structure comprises an asymmetric design, wherein the inlet and outlet do not lie colinear with a geometric centre of the structure. This allows a majority of the interior volume of the structure to be offset from the flow path between the inlet and the outlet. This can facilitate demarcation between a storage region and a flow region through the structure. Furthermore, an asymmetric design may facilitate the structure being accommodated by surrounding structures of the aircraft, since the structure may extend into regions of available volume. The geometric centre may be a centroid of the interior volume of the structure.

Optionally, a majority of the interior volume of the structure is below the axis. In this way, fluid stored within the structure is retained predominantly, by gravity, below the fluid flow path between the inlet and the outlet. In examples where a gas valve is present in a ceiling portion, the arrangement of the interior volume being below the axis can more effectively facilitate removal of air from the fuel as it enters the structure, for example, with the majority of the interior volume acting as a sump. In examples where the barrier is present, the barrier may be configured as a "false floor" that horizontally divides the interior volume of the structure, such that the majority of the interior volume of the structure lies below the barrier, and a flow path connecting the inlet to the outlet is above the barrier.

Optionally, the axis extending from the inlet to the outlet intersects the first region, and wherein the second region forms the majority of volume of the structure. In this way, the barrier element acts as a boundary to the bulk fuel flow through the structure, which flows from the inlet to the outlet, helping to maintain flow rate through the structure.

Preferably, the fuel conduit comprises a first fuel pipe and a second fuel pipe, the structure fluidically connecting the first fuel pipe to the second fuel pipe, the series of the first fuel pipe, structure, and second fuel pipe thereby fluidically connecting the fuel tank to the fuel-consuming component. In other words, the structure is at an intermediate position of the fuel line, between the fuel tank and the fuel-consuming component. It will be appreciated that being at an intermediate position of the fuel line, between the fuel tank and the fuel-consuming component, means that a flow path exists from the fuel tank, through the fuel structure, to the fuel-consuming component - the structure does not need to be physically disposed at a location between the fuel tank and the fuel-consuming component (as, for the example, the layout of the fuel line may allow the structure to be disposed at another location, whilst the aforementioned flow path still exists. In other examples, the structure directly interfaces with the fuel tank or the fuel-consuming component, such that the fuel conduit only runs between the fuel-consuming component and the structure, or the fuel tank and the structure, respectively.

Optionally, the structure can be considered to form an expanded portion of the fuel line, operable as a fluid storage structure, and positioned along a portion of a length of the fuel line, the expanded portion having a larger cross-sectional area than preceding and/or succeeding conduits of the fuel line. In some examples, the conduits of the fuel line may comprise a wall defining a bore with a first-cross-sectional area. The expanded portion, operable as a fluid storage structure, has a wall defining an expanded bore with a second cross-sectional area, larger than the first cross-sectional area. This can provide the structure with a relatively simple construction, which may be more straightforward to retrofit into an aircraft due to a similarity in geometry to the existing conduits the structure is replacing, for example.

A second aspect of the present invention provides an aircraft comprising the aircraft fuel system according to the first aspect. The aircraft comprises the fuel line, the fuel tank, and the fuel-consuming component. The aircraft can benefit from multi-stage fuel usage as described for the first aspect. When on the ground, for example, the aircraft can use fuel-additive blend or SAF, for example, to reduce unwanted emissions, with the structure acting as a relatively small-scale storage for fuel additive or SAF. Once airborne, for example, the aircraft can then use fuel stored within the fuel tank.

Optionally, the fuel tank is storing aircraft fuel and the structure of the fuel line is storing an aircraft fuel additive or a further aircraft fuel different to the aircraft fuel stored in the fuel tank. The further fuel may be a synthetic, or sustainable, aviation fuel (SAF). It will be understood that, in contrast, the present disclosure also provides for an aircraft fuel system which is empty of fuel, but which nonetheless is beneficial in that it provides for a fuel system which can receive these fuels.

Optionally, the structure of the fuel line is storing a blend of aircraft fuel with the aircraft fuel additive. In some examples, the structure stores a quantity of between 100 and 500 litres of fuel-additive blend.

Optionally, the fuel tank and the structure are storing different substances, such as conventional aircraft fuel in the fuel tank and aircraft fuel-additive blend in the structure.

Optionally, the fuel-consuming component is an auxiliary power unit of the aircraft. The auxiliary power unit provides energy for functions other than propulsion of the aircraft. The auxiliary power unit may be a principal energy provider when the aircraft is operated on the ground. Accordingly, the auxiliary power unit is operable to consume the fuel-additive stored in the structure, reducing unwanted emissions by the auxiliary power unit.

A third aspect of the present invention provides a method of operating an aircraft comprising providing aircraft fuel at a fuel tank of the aircraft; providing (i) a further aircraft fuel, different to the aircraft fuel provided at the fuel tank of the aircraft, and/or (ii) an aircraft fuel additive at a structure of a fuel line, the fuel line fluidically connecting the fuel tank to a fuel-consuming component; and consuming, by the fuel consumer, the further aircraft fuel and/or aircraft fuel mixed with the aircraft fuel additive from the structure. "Providing" aircraft fuel at the fuel tank of the aircraft and "providing" aircraft fuel additive at the structure of the fuel line encompasses the fuel being present already, such as having retained a quantity of each from a previous refuelling event. In accordance with discussion of the first and second aspects, the method facilitates multi-stage fuel usage by the aircraft. The contents of the structure, which includes aircraft fuel additive, is thereby usable to reduce unwanted emissions, such as in ground operation. The aircraft fuel provided in the fuel tank can be used by the aircraft at a later point. The further aircraft fuel being "different" to the aircraft fuel provided at the fuel tank of the aircraft means the further aircraft fuel has a different chemical composition to the aircraft fuel, for example, or is sourced from an alternative source, for example.

As will have been appreciated from the discussion of the first and second aspects, the method involves providing the fuel tank with a different contents to the structure to thereby facilitate the multi-fuel operation. A different contents means that the aircraft fuel provided in the fuel tank comprises a different mixture of substances to the aircraft fuel additive or aircraft fuel additive blend, or alternative fuel such as SAF, stored within the structure. The contents of the structure can be used initially by the fuel consumer, and the contents of the fuel tank used subsequently, as the fuel consumer draws upon the contents of the fuel line. The use of contents of the structure may be for a relatively short time compared to an overall operational time frame of the aircraft, due to, for example, the structure storing a relatively small volume of fuel additive or alternative fuel, for example. For example, in some embodiments the contents of the structure may be utilised in a time scale of minutes whereas the contents of the fuel tank is used in a time scale of hours. In examples where, for example, the structure stores a relatively larger volume, then the contents of the structure may be utilised over a relatively longer period.

Optionally, aircraft fuel mixed with the aircraft fuel additive from the structure is consumed at a first time, and at a second, later time, by the fuel consumer, aircraft fuel from the fuel tank is consumed. Optionally, the further fuel stored by the structure is consumed at a first time, and at a second, later time, by the fuel consumer, aircraft fuel from the fuel tank is consumed.

Optionally, providing aircraft fuel at the fuel tank of the aircraft comprises receiving aircraft fuel by a fuel tank filling procedure in which aircraft fuel is provided to the fuel tank through a refill port of the fuel tank.

Optionally, providing (i) the further aircraft fuel and/or (ii) aircraft fuel additive at the structure of the fuel line comprises receiving, respectively, the further aircraft fuel and/or aircraft fuel additive by a structure filling procedure in which the further aircraft fuel and/or aircraft fuel additive is provided to the structure through a fluid refill port of the structure. In this way, the structure may be refuelled separately from the fuel tank, allowing different fluids to be provided independently to each. For example, the fuel tank may be provided with aircraft fuel concurrently with the structure being provided with an additive-fuel blend.

Optionally, the fuel consumer is an auxiliary power unit.

Optionally, at the first time, the aircraft is on the ground. In some examples, at the second time, the aircraft is airborne.

Optional features of any one of the aspects of the present invention may be applied equally to any other one of the aspects of the present invention, where appropriate. In particular, it will be appreciated that description of features of the aircraft fuel system in relation to the first aspect also applies to an aircraft comprising the aircraft fuel system, as per the second aspect. Furthermore, functions described for the features of the first and second aspects can accordingly form part of the method according to the third aspect.

### BRIEF DESCRIPTION OF THE DRAWINGS

Embodiments of the invention will now be described, by way of example only, with reference to the accompanying drawings, in which:
Figure 1 shows a schematic view of an aircraft fuel system according to an example;
Figure 2 shows a structure of an aircraft fuel system according to an example;
Figure 3 shows a structure of an aircraft fuel system according to a further example;
Figure 4 shows a structure of an aircraft fuel system according to a yet further example;
Figure 5 shows a retrofit installation procedure for an aircraft fuel system according to an example;
Figure 6 shows further features of an aircraft fuel system according to an example.
Figure 7 shows an aircraft equipped with an aircraft fuel system according to an example; and
Figure 8 is a flowchart depicting steps performed in a method of operating an aircraft according to an example.

### DETAILED DESCRIPTION

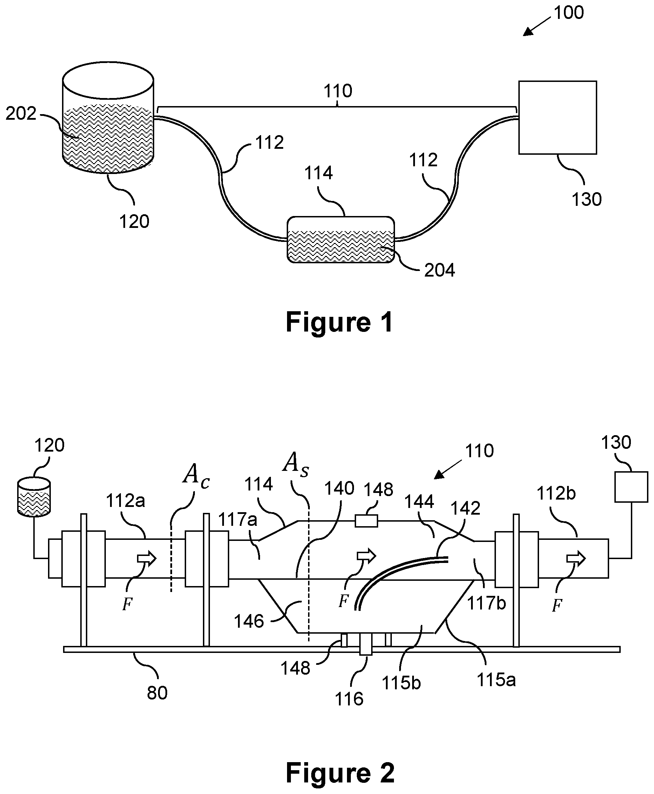

An aircraft fuel system 100 according to the present disclosure is depicted schematically in Figure 1. The aircraft fuel system 100 is formed of a fuel tank 120 which is connected to a fuel-consuming component 130 by a fuel line 110. The fuel line 110 is formed of a fuel conduit 112 and a storage structure 114, which will be referred to hereafter as "the structure" for brevity. In this example, the fuel-consuming component 130 is an auxiliary power unit (APU) of an aircraft, and the fuel tank 120 is for storing aircraft fuel 202 for use by the APU 130. The fuel line 110 is for conveying the aircraft fuel 202 from the fuel tank 120 to the APU 130. The structure 114 of the fuel line 110 is for forming part of the fuel line 110 as well as storing aircraft fuel additive 204 or a further type of fuel such as SAF. The arrangement of the aircraft fuel system 100, as will be described in more detail hereafter, is such that, in operation, by receiving fuel through the fuel line 110, the APU 130 can first consume contents of the structure 114, and then consume the aircraft fuel 202 from the fuel tank 120 thereafter. This allows the fuel system to straightforwardly utilise different fuels at different stages of operation.

It will be appreciated that, in the description herein, reference to elements being "below" other elements means in a conventional reference frame of the aircraft in a landed position, where "below" corresponds generally to a direction towards the ground / earth, i.e. in the direction of gravity (which dictates how liquids will settle within a volume, for example, and so forms a natural reference frame to describe the fuel system). Similarly, "above" corresponds generally to a direction away from the ground / earth. A "horizontal" plane is therefore one which is generally parallel with the plane of the ground (ignoring local surface deformations of the ground, for example) whilst a vertical plane is one perpendicular to the horizontal plane. A "floor" portion will be understood to be in a lower portion and a "ceiling" portion will be understood to be in an upper portion.

Figure 2 depicts the fuel line 110 in further detail, according to an example. It will be appreciated also that Figure 2, whilst depicting geometry and form of the fuel line 110, is nevertheless not to scale.

The fuel conduit 112 is formed of a first fuel pipe 112a joining the fuel tank 120 to the structure 114, and a second fuel pipe 112b joining the structure 114 to the APU 130. The exact configuration of the fuel conduit 112 will generally vary based on an architecture of the overall fuel system, including the size, shape, and number of portions which join the fuel tank 120 to the fuel-consuming component 130, and so the present example is a simplified arrangement for ease of explanation. However, generally, the fuel conduit 112 and structure 114 are arranged sequentially such that fuel is conveyed through the fuel line 110. In some examples, there may be further devices or sections not illustrated here as part of the fuel line 110, such as pumps, valves, and/or sensors which are operable to monitor and/or control flow of fluids through the fuel line 110.

The structure 114 is formed of a housing 115a which contains an interior volume 115b in which fluid can be stored. An inlet 117a disposed in the housing 115a interfaces with the first fuel pipe 112a, and an outlet 117b disposed in the housing 115a interfaces with the second fuel pipe 112b. A general direction of fuel flow through the fuel line 110, from the fuel tank 120 to the APU 130 is indicated in figures with an arrow F. The housing 115a is mounted to a surrounding aircraft structure 80 by one or more supports 148 which help distribute the load of any stored fuel in the structure 114 into e.g. the fuselage frame.

The structure 114, relative to the fuel conduit 112, is a region of increased volume (for example per unit length), which allows it to store an increased volume of fuel compared to a similar length of fuel conduit 112. This is achieved by having a cross-sectional area *Aₛ* of the structure 114 greater than a cross-sectional area *A_{c}* of the fuel conduit 112. Compared with an equivalent length (in the direction of fuel flow F) of fuel conduit 112, the structure 114 of this example can store more than twice the volume of fluid; in other examples, the structure 114 is dimensioned to store in excess of a factor of three, five, ten, or greater, times more fuel than the fuel conduit 112.

It will be appreciated that interior volume of the structure 114 can depend upon a suitable form for the structure 114 to fit in amongst surrounding aircraft structures, for example, and/or a desired function for the structure 114. For example, the structure 114 may be dimensioned to hold around 300 litres of additive-fuel blend, for example, such that the structure 114 is configured to store enough additive-fuel blend for use by the APU 300 to facilitate ground operations of the aircraft without the APU requiring fuel from the fuel tank 120. In other examples, the structure 114 may be significantly smaller, such as 5 litres, and may store undiluted aircraft fuel additive for mixing with fuel from the fuel tank 120. In such examples, it is generally anticipated that contents of the structure 114 will be used in conjunction with fuel from the fuel tank 120, rather than using the contents of the structure 114 ahead of fuel from the fuel tank 120. In such examples, the structure 114 may be configured such that undiluted aircraft fuel additive is injected into the supply of fuel from the fuel tank 120 at a uniform rate, for example, or according to a desired dosing profile, for example, which defines a time-dependent or operation-dependent amount of undiluted aircraft fuel additive to be released into the flow of fuel through the fuel line. This can be realised in active fashion, for example by use of fluid pump components within the structure 114 which are operable to bring about mixing of the stored fuel additive with the flow of fuel passing through the structure. Alternatively or additionally, this can be realised in a passive fashion in which the structure 114 is configured such that flow of fuel through the structure brings about mixing with stored undiluted aircraft fuel additive to gradually utilise and deplete the stored undiluted aircraft fuel additive, in some examples absent operation of any fluid pump components, for example.

In this example, the structure 114 has a tapered interior profile. As such, the cross-sectional area *Aₛ* of the structure 114 increases gradually with distance from the inlet 117a and the outlet 115b, reaching a maximum cross-sectional area at an intermediate position between the inlet 117a and the outlet 115b. Considered in the direction of fuel flow F, the cross-sectional area *Aₛ* of the structure 114 gradually increases from the position of the inlet 117a before decreasing to the position of the outlet 117b. This gradual change in cross-sectional area can prevent undesirable fluid flow properties such as turbulent flow, separation of air from fluid, or similar. In some cases, this gradual change is limited to a 6-degree slope (with respect to the direction of fuel flow F, which is generally parallel to e.g. a wall of the fuel conduit).

In this example, the interior volume 115b of the structure 114 is split into two regions by a false floor 140, which is an example of a barrier element 140 that may be provided in accordance with the present disclosure. The false floor 140 is planar and oriented horizontally through the structure 114, spanning between interior walls of the housing 115a to substantially divide the interior into two regions. On a first, upper side of the false floor 140 is a first region 144. Fuel flow from the inlet 117a to the outlet 117b occurs through the first region 144. On a second, lower side of the false floor is a second region 146. The false floor 140 substantially divides the volume of the structure 114 by preventing flow between the two regions 144, 146.

An inducer pipe 142 extends from a position in the second region 146 to a position in the first region 144, extending through the false floor 140. As fuel flows through the structure 114, a flow of fuel from the second region 146 to the first region 144 through the inducer pipe 142 is induced, thereby drawing out fuel from the second region 146 and conveying said fuel to the APU 130. In some examples, the second region 146 may be provided with undiluted additive, for example, and fuel from the fuel tank 120 which is flowing through the first region 144 continually dosed with additive from the second region 146. Means of equalising pressure, such as a vent from the first region or external region into the second region, may be included in the structure 114 to backfill the second region and thereby prevent or otherwise mitigate formation of a vacuum which may otherwise impede fluid flow through the inducer pipe 142.

A refill port 116 is provided in a floor portion of the housing 115a of the structure 114. The refill port 116, in this example, is in fluidic communication with the second region 146 of the interior volume 115b and provides a flow path from an exterior of the structure into the interior volume 115b, such that the interior volume 115b can be filled with fluid, and in particular the second region 146 of the interior volume. As such, the second region 146 is a fuel storage portion of the interior volume 115b, as fuel provided through the refill port 116 is retained primarily within the second region 146.

A gas release valve 148 is disposed within a ceiling of the housing 115a and is operable to release gas which has accumulated in the structure 114 to an exterior of the structure. This gas, which will likely contain a mixture of air and fuel fumes, can be captured and recirculated back to the tank, for example, or expelled from the aircraft by way of a vent or surge tank on the aircraft. Provision of the gas release valve 148 can allow the structure 114 to be operable as a fuel-air separator device.

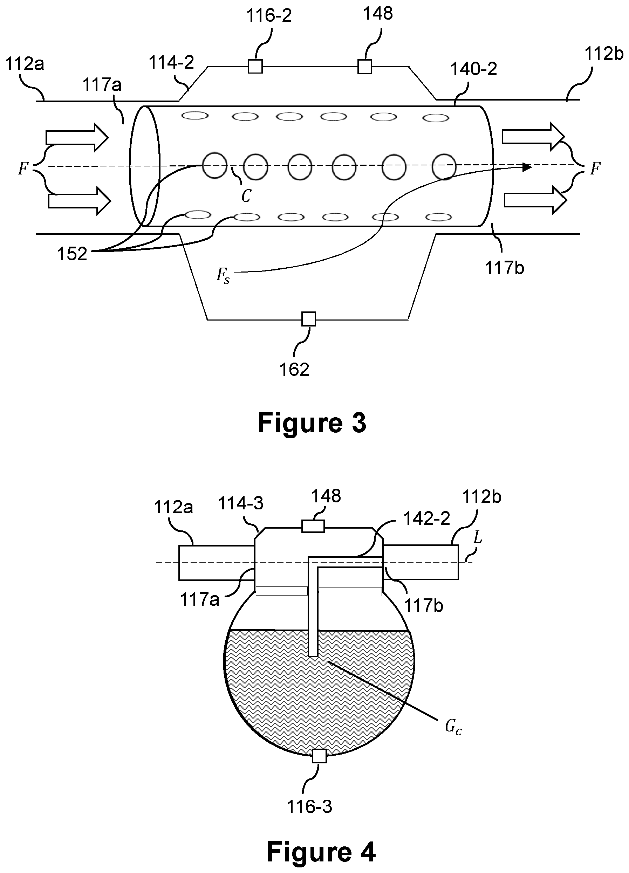

Figure 3 illustrates a second example of a structure 114-2. For visual clarity, only a subset of features are labelled and depicted in the Figure.

In the structure 114-2, a barrier element 140-2 is provided according to a second example. In this example, the barrier element 140-2 is a tube with a plurality of through holes 152 disposed within the surface of the barrier element 140-2; in Figure 3, only a subset of the through holes 152 are labelled to aid visual clarity. The through holes 152 are arranged in a regular distribution through the surface of the barrier element 140-2, being generally equidistantly spaced and sized. This may provide uniform hydrodynamic properties across length of the barrier element 140-2. In other examples, a non-regular distribution may be provided to bring about specific hydrodynamic behaviour within the structure 114-2, for example.

The barrier element 140-2 extends from the inlet 117a to the outlet 177b, and arranged such that a general direction of fuel flow through the structure 114 passes through a central longitudinal axis C of the barrier element 140-2. The barrier element 140-2 is dimensioned to match, or substantially match (such as within 10%), the preceding and/or subsequent conduit portions 112a, 112b. In this way, from the perspective of fuel flowing through the fuel conduit 112, the barrier element 140-2 functions as an extension of the fuel conduit 112 by maintaining a boundary of the fuel flow. The through holes 152 in the surface of the barrier element 140-2 permit movement of fuel stored in the rest of the structure 114 (i.e. outside of the barrier element) into the general fuel flow path from the inlet 117a to the outlet 117b, such as by route indicated by arrow *Fₛ*.

A refill port 116-2 is provided in a ceiling portion of the structure 114-2. A liquid drainage port 162 is provided in a floor of the structure 114-2, through which contents of the structure 114-2 can be drained, such as to perform maintenance or cleaning of the structure 114-2.

Figure 4 depicts a third example of the structure 114-3. In Figure 4, an axis L is indicated between the inlet 117a and the outlet 117b. The structure 114-3 has a bulbous portion which extends beneath the axis L and constitutes a majority of an interior volume of the structure 114-3. An inducer pipe 142-2 extends from the outlet 117b to within the bulbous portion. A geometric centre *G_{c}* of the structure 114-3 is offset from the axis *L;* although only schematic, this can similarly be recognised in the examples of Figures 2 and 3, as well. This can allow a majority of the stored fluid be stored at a relatively lower position, which can improve structural stability of the structure 114 given the lower centre of mass of the stored fluid. Furthermore, in the example of Figure 4, the arrangement of the inlet 117a, bulbous portion and inducer pipe 142-2 can mean if there is aerated fuel within the first fuel conduit 112a, the aerated fuel may enter, settle into a sump provided by the bulbous portion, releasing air which rises into the ceiling and can be released by the air release valve 148.

In the example of Figure 4, no barrier element is present. Furthermore, in the example of Figure 4, a bi-directional refill and drainage port 116-3 is provided in a floor of the structure 114-3 which integrally combines refilling functionality with drainage functionality.

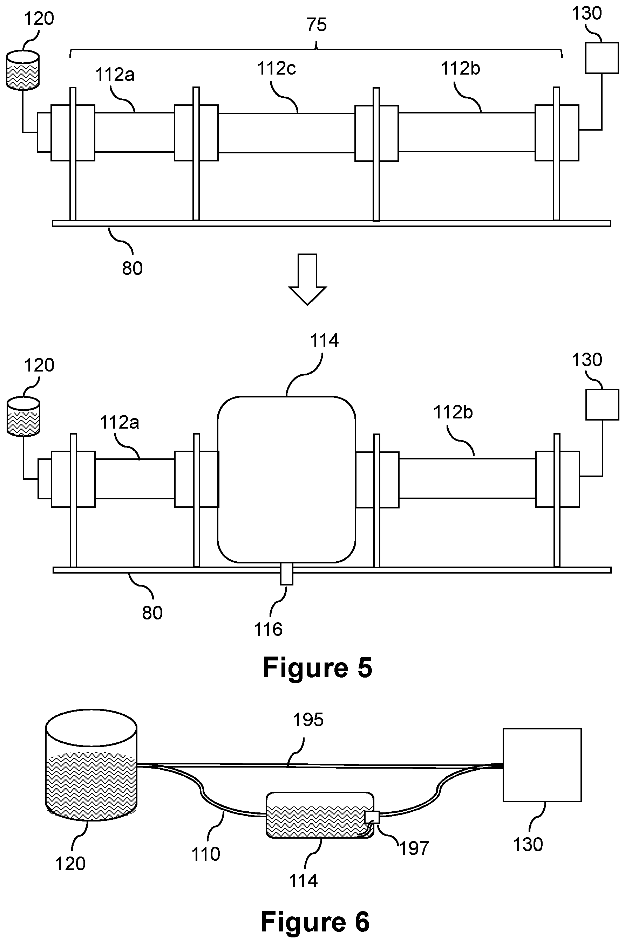

Figure 5 illustrates a retrofit installation procedure, wherein an existing fuel system of an aircraft is modified to become a fuel system in accordance with the present disclosure. In particular, an existing fuel line 75 between a fuel tank 120 and a fuel-consuming component 130 comprises three fuel conduit portions 112a, 112b, 112c. A target portion 112c is removed and replaced with a structure 114, such as one of the structures 114, 114-2, 114-3 described in view of Figures 2-4. Compared with the target portion 112c, the structure 114 has increased volume and can be used to store fuel additive or a further type of fuel, provided to the structure 114 by the refill port 116. In this way, an aircraft which has an existing fuel system can be modified to enable a multi-fuel fuel system in accordance with the present disclosure.

Figure 6 illustrates further features which may be included in fuel systems according to the present disclosure. In the example of Figure 6, a bypass line 195 is provided between the fuel tank 120 and the fuel-consuming component 130, which is selectively operable to bypass the structure 114 and thereby provide an additional fuel flow route from the fuel tank 120 to the fuel-consuming component 130. This can be useful when is it preferable to store the contents of the structure 114 rather than consume them by the fuel-consuming component 130. A fuel scavenge system 197 is also provided, comprising a jet pump or ejector pump which is operable to bring about suction of contents of the structure 114 from the internal volume and thereby helps remove the contents from the structure 114, which can avoid or reduce trapping of fuel in a sump portion of the structure 114, for example. Ensuring the structure 114 is empty can aid in balancing weight distribution across the aircraft.

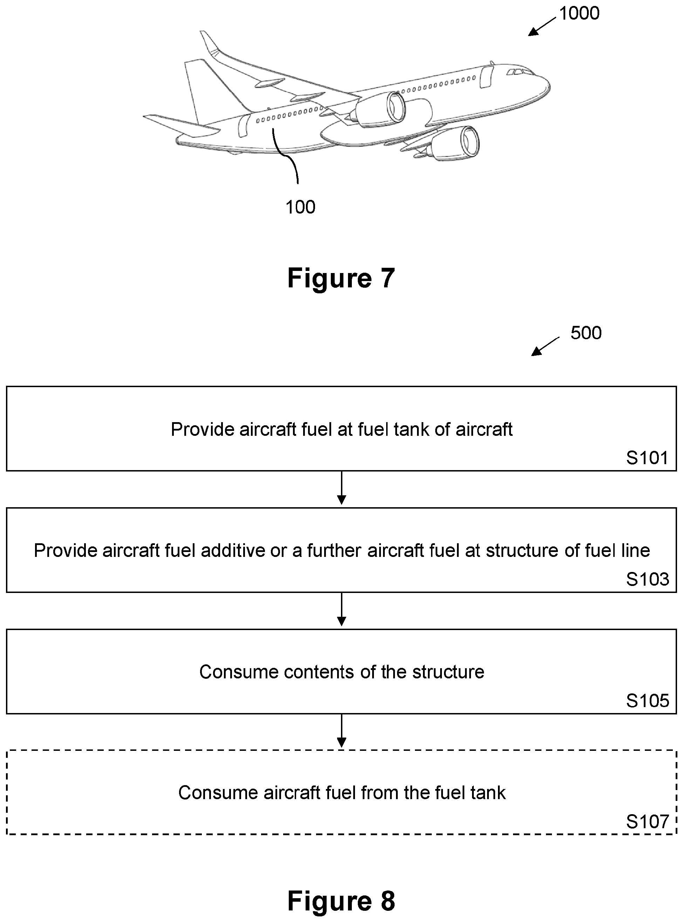

Figure 7 illustrates an aircraft 1000 comprising a fuel system 100 in accordance with the present disclosure. As described previously, the aircraft 1000 is operable to use multiple fuels at different operational stages. The aircraft 1000 can utilise contents of the structure 114 whilst on the ground, which can reduce unwanted emissions and help preserve local air quality. Similarly, the aircraft 1000 can utilise contents of the structure 1000 during take-off and initial climb from an airport, in which emissions by the aircraft can still contribute to local air quality, which is typically measured for approximately 1000 metres, or 3000 feet, of altitude from the ground. At a later stage, such as when contents of the structure 114 is depleted, and/or when the aircraft 1000 is at a sufficiently high altitude, for example, the aircraft 1000 can use conventional aircraft fuel stored within the fuel tank 120.

Figure 8 is a flowchart formed of steps S101, S103, S105 which are performed in a method 500 of operating an aircraft, such as the aircraft 1000 of Figure 7, according to the present disclosure. The method 500 utilises an aircraft fuel system 100 such as described above in view of Figures 1-6. Step S107 is provided as an optional additional step.

At Step S101, aircraft fuel is provided at the fuel tank 120 of the aircraft fuel system 100. This aircraft fuel may have been left over from previous operation of the aircraft, for example, and so providing aircraft fuel at the fuel tank encompasses the aircraft fuel already being stored by the fuel tank. In some examples, Step S101 involves receiving aircraft fuel by a fuel tank filling procedure in which aircraft fuel is provided to the fuel tank through a refill port of the fuel tank. This can correspond to a conventional aircraft refuelling process.

At Step S103, aircraft fuel additive or a further aircraft fuel, different to the aircraft fuel provided at Step S101, such as SAF, is provided at the structure 114 of the fuel line of the aircraft fuel system 100. This aircraft fuel additive may have been left over from previous operation of the aircraft, for example, and so providing aircraft fuel additive or the further aircraft fuel at the structure 114 encompasses the aircraft fuel additive or further aircraft fuel already being stored by the structure 114. In some examples, Step S103 involves receiving aircraft fuel additive by a structure filling procedure in which aircraft fuel additive is provided to the structure through a fluid refill port of the structure.

The aircraft fuel additive provided to the structure 114 may be provided in undiluted form, for example, or in a blended form wherein aircraft fuel blended with aircraft fuel additive is provided. Step S103 may involve entirely filling the structure 114, as well as at least a portion of the fuel conduit 112, with fuel-additive blend. Step S103 may involve entirely filling the structure 114 with SAF.

At Step S105, contents of the structure is consumed by a fuel-consuming component. The contents of the structure is the aircraft fuel additive or the further aircraft fuel provided at the structure of the fuel line. For example, aircraft fuel mixed with the aircraft fuel additive from the structure is consumed by the fuel-consuming component. This may involve, where undiluted fuel additive is stored in the structure, mixing of aircraft fuel from the fuel tank with the fuel additive as the aircraft fuel passes through the structure. Where a fuel-additive blend is stored by the structure, the fuel-additive blend is drawn from the structure and provided to the fuel-consuming component. Where the structure is substantially filled with the fuel-additive blend, for example, the fuel-consuming component may consume all the fuel-additive blend stored by the structure before the fuel line provides aircraft fuel from the fuel tank for use by the fuel-consuming component. Step S105 may take place whilst the aircraft is on the ground, for example.

At Step S107, aircraft fuel from the fuel tank is consumed by the fuel-consuming component. This occurs at a later time than S105. This can occur once all the contents of the structure is depleted. Step S107 may occur while the aircraft is airborne, for example.

It will be appreciated that, in a general sense, the method comprises storing a first type of fuel in the fuel tank, storing a second, different type of fuel, or an additive which facilitates generation of a second, different type of fuel (such as by forming a blend of additive with conventional aircraft fuel) in a structure in the fuel line, and providing these to the fuel-consuming component. These may be consumed such that firstly, the contents of the structure is consumed, and then, later, contents of the fuel tank is consumed. Alternatively, these may be consumed that the contents of the structure is consumed concurrently with contents of the fuel tank.

The above embodiments are to be understood as illustrative examples of the invention. Further embodiments of the invention are envisaged.

For example, in the illustrated embodiments the APU of the aircraft is the fuel-consuming component. In other examples, an engine, or engines, of the aircraft may be the fuel-consuming component. The contents of the structure may be used during take-off and initial climb, for example.

For example, the illustrated examples of the present disclosure primarily refer to aircraft fuel additive being stored in the structure in either a undiluted or fuel-additive blend form. However, it will be appreciated in other examples that SAF can be stored in the structure, without the presence of aircraft fuel additive, for example, whilst facilitating multi-fuel operation as described previously.

In some examples, a plurality of structures are provided, each structure being arranged on a respective fuel line of a fuel-consuming component. In this way, each fuel-consuming component can concurrently use contents of a respective structure during an initial operational phase, for example.

For example, the structure may be similar in geometry to the pipe conduit, albeit enlarged to have a larger cross-sectional area. That is, the structure may be substantially pipe-shaped, for example, having a bore with a larger diameter than a bore of the preceding and succeeding pipework, and provided with a refill port to allow aircraft fuel additive to be provided into the structure.

The structure may comprise additional features to aid in increase storage volume. For instance, bifurcated pipework as part of the structure can increase storage volume of the structure (simply by provision of multiple portions which can store and convey fuel, for example). Similarly, loops or other means of generating torturous paths for fluids can increase a storage volume by providing an increased total path.

Two or more structures may be provided sequentially along a pipeline to facilitate the described approach. This can be useful where, for example, a size of each structure is limited due to surrounding aircraft structures, and so providing two or more structures can facilitate an overall increase in volume to reach a total volume suitable for a desired operational timeframe, for example, whilst each structure remains relatively limited in size.

It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims. It is to be noted that the term "or" as used herein is to be interpreted to mean "and/or", unless expressly stated otherwise.

## Claims

1. An aircraft fuel system comprising:
a fuel line configured to fluidically connect a fuel tank to a fuel-consuming component, wherein the fuel line comprises, fluidically connecting the fuel tank to the fuel-consuming component:
a fuel conduit, and
a structure in fluidic connection with the fuel conduit,
the structure comprising an inlet and outlet for conveying aircraft fuel from the fuel tank to the fuel-consuming component through an interior volume of the structure, a cross-sectional area of the interior volume of the structure larger than a cross-sectional area of an interior of the fuel conduit, and
the structure comprising a fluid refill port fluidically connecting the interior of the structure to an exterior of the structure and through which fluid can be provided to the structure.

2. The aircraft fuel system according to claim 1, wherein the cross-sectional area of the structure is more than twice as large as the cross-sectional area of the fuel conduit, optionally wherein the cross-sectional area is more than three times larger than the cross-sectional area of the fuel conduit.

3. The aircraft fuel system according to claim 1 or 2, wherein:
(i) the structure comprises a gas release valve operable to release gas from the interior volume of the structure to the exterior of the structure, optionally wherein the gas release valve is disposed in a ceiling portion of the structure; and/or
(ii) wherein the structure further comprises a liquid drainage port through which liquid within the structure can be released to the exterior of the structure, optionally wherein the liquid drainage port is integrally combined with the fluid refill port as a bidirectional liquid port.

4. The aircraft fuel system according to any one of the preceding claims, wherein the interior volume of the structure has a cross-sectional area which varies gradually along a bulk fuel flow direction through the structure.

5. The aircraft fuel system according to any one of the preceding claims, wherein the structure comprises a barrier element within the interior volume of the structure, the barrier element forming at least a portion of a boundary between a first region of the interior volume and a second region of the interior volume, wherein, in use, a majority of bulk fuel flow from the inlet to the outlet is through the first region.

6. The aircraft fuel system according to claim 5, wherein:
(i) the barrier element is perforated such that fluid can move from the second region to the first region, wherein optionally the barrier element is a perforated pipe extending between the inlet and the outlet; and/or
(ii) wherein the structure comprises an inducer pipe which extends through the barrier element from the second region to the first region to thereby provide a fluid pathway from the second region to the first region.

7. The aircraft fuel system according to any preceding claim, wherein a geometric centre of the structure is offset from an axis extending from the inlet to the outlet; optionally
wherein a majority of the interior volume of the structure is below the axis.

8. The aircraft fuel system according to claim 7 when the majority of the interior volume of the structure is below the axis and when dependent upon claim 5 or 6, wherein the axis extending from the inlet to the outlet intersects the first region, and wherein the second region forms the majority of volume of the structure.

9. The aircraft fuel system according to any previous claim, wherein:
(i) the fuel conduit comprises a first fuel pipe and a second fuel pipe, the structure fluidically connecting the first fuel pipe to the second fuel pipe, the series of the first fuel pipe, structure, and second fuel pipe thereby fluidically connecting the fuel tank to the fuel-consuming component; and/or
(ii) wherein the volume of the structure exceeds 100 litres, optionally wherein the volume exceeds 300 litres.

10. An aircraft comprising the aircraft fuel system according to any previous claim, the aircraft comprising the fuel line, the fuel tank, and the fuel-consuming component.

11. The aircraft of claim 10, wherein the fuel tank is storing aircraft fuel and the structure of the fuel line is storing an aircraft fuel additive or a further aircraft fuel different to the aircraft fuel stored in the fuel tank; optionally
wherein the structure of the fuel line is storing a blend of aircraft fuel with the aircraft fuel additive.

12. The aircraft of claim 10 or 11, wherein the fuel-consuming component is an auxiliary power unit of the aircraft.

13. A method of operating an aircraft, comprising:
providing aircraft fuel at a fuel tank of the aircraft;
providing (i) a further aircraft fuel, different to the aircraft fuel provided at the fuel tank of the aircraft, and/or (ii) an aircraft fuel additive, at a structure of a fuel line, the fuel line fluidically connecting the fuel tank to a fuel-consuming component; and
consuming, by the fuel consumer, the (i) further aircraft fuel from the structure and/or (ii) aircraft fuel mixed with the aircraft fuel additive from the structure.

14. The method of claim 13, wherein
providing aircraft fuel at the fuel tank of the aircraft comprises receiving aircraft fuel by a fuel tank filling procedure in which aircraft fuel is provided to the fuel tank through a refill port of the fuel tank; and/or
providing (i) the further aircraft fuel and/or (ii) aircraft fuel additive at the structure of the fuel line comprises receiving, respectively, the further aircraft fuel and/or aircraft fuel additive by a structure filling procedure in which the further aircraft fuel and/or aircraft fuel additive is provided to the structure through a fluid refill port of the structure.

15. The method of claim 13 or 14, wherein the fuel consumer is an auxiliary power unit, and/or, at the first time, the aircraft is on the ground.
